# EUROPEAN PATENT APPLICATION

(11) **EP 4 507 071 A1**
(43) Date of publication of application: **12.02.2025**
(21) Application number: 22952734.6
(22) Date of filing: 27.09.2022
(51) Int. Cl.: H01M 10/6557, H01M 10/647

(54) **THERMAL MANAGEMENT COMPONENT, BATTERY, AND ELECTRICAL DEVICE**

(30) Priority: 26.07.2022 CN 202221932075 U
(71) Applicant: Contemporary Amperex Technology (Hong Kong) Limited, Central, Central And Western District (HK)
(72) Inventor: LI, Honglei, Ningde, Fujian 352100 (CN); PAN, Xin, Ningde, Fujian 352100 (CN); CHEN, Zhiming, Ningde, Fujian 352100 (CN)
(74) Representative: Ziebig Hengelhaupt Intellectual Property Attorneys Patentanwaltskanzlei PartGmbB
(86) International application number: PCT/CN2022/121898
(87) International publication number: WO 2024/021293

(57) **Abstract**

Embodiments of the present application provide a thermal management assembly, a battery, and an electric apparatus. The thermal management assembly includes a base plate and a cover plate, the cover plate covers and closes the base plate to form a flow channel, the flow channel is adapted for accommodating a heat regulation medium, the cover plate includes a plurality of fins and connecting portions each connected to adjacent two fins, the plurality of fins extend in a first direction and are spaced apart in a second direction, at least some of the plurality of fins are formed as hollow structures each including a cavity, the flow channel includes the cavity, and the connecting portion and the corresponding adjacent two fins form a placement slot, where the first direction intersects with the second direction. The thermal management assembly can effectively meet thermal management requirements of the battery.

## Description

### CROSS-REFERENCE TO RELATED APPLICATIONS

The present application claims priority to Chinese Patent Application No. 202221932075.X, entitled "THERMAL MANAGEMENT ASSEMBLY, BATTERY, AND ELECTRIC APPARATUS" and filed on July 18, 2022, which is incorporated herein by reference in its entirety.

### TECHNICAL FIELD

The present application belongs to the field of battery technologies, and in particular, relates to a thermal management assembly, a battery, and an electric apparatus.

### BACKGROUND

Batteries are widely used in electric apparatuses, such as mobile phones, laptops, electric scooters, electric cars, electric airplanes, electric ships, electric toy cars, electric toy ships, electric toy planes, and electric tools.

In the development of battery technologies, effective thermal management on batteries is an important research direction in the battery technologies.

### SUMMARY

Embodiments of the present application provide a thermal management assembly, a battery, and an electric apparatus, which can effectively meet thermal management requirements of the battery.

In a first aspect, an embodiment of the present application provides a thermal management assembly, including a base plate and a cover plate. The cover plate covers and closes the base plate to form a flow channel, the flow channel is adapted for accommodating a heat regulation medium, the cover plate includes a plurality of fins and connecting portions each connected to adjacent two fins, the plurality of fins extend in a first direction and are spaced apart in a second direction, at least some of the plurality of fins are formed as hollow structures each including a cavity, the flow channel includes the cavity, and each connecting portion and corresponding adjacent two fins form a placement slot, where the first direction intersects with the second direction.

According to the thermal management assembly in the embodiment of the present application, the cover plate includes a plurality of fins and connecting portions each connected to adjacent two fins, the fins are formed as hollow structures each including a cavity, the cavity is included by a flow channel formed by the cover plate and the base plate, and the heat regulation medium flows through the flow channel, so that the flow channel conducts heat of a battery cell placed in a placement slot formed by the connecting portion and corresponding adjacent two fins. The fins each with the cavity can balance the temperature of the battery cell through the internal heat regulation medium, are simple in structure, small in size, and easy to be processed, and can ensure an energy density of the battery.

In some embodiments, the base plate includes a plurality of support portions, a channel is formed between adjacent two support portions, and the flow channel includes the channel.

In the foregoing technical solution, the support portions can support the cover plate and prevent unnecessary deformation of the cover plate from affecting the thermal management effect of the thermal management assembly.

In some embodiments, in at least some of the fins, an orthographic projection of each fin on the base plate falls within a range of a corresponding channel to ensure that the channel is in communication with the cavity.

In some embodiments, an orthographic projection of the connecting portion on the base plate covers some of the support portions and channels.

In the foregoing technical solution, the support portions are arranged at least on two sides of each fin, thereby providing better support for the battery cells placed on the connecting portions.

In some embodiments, at least some of a plurality of channels are in communication with each other.

In the foregoing technical solution, the thermal management assembly can control the temperature of different battery cells by controlling the temperature of the heat regulation medium in the plurality of channels.

In some embodiments, the cover plate includes snapping ends located at two opposite ends in the second direction, and the snapping ends are connected with the outermost support portions of the base plate in the second direction in a snap-fit manner, so that the cover plate and the base plate are connected to each other in the second direction, thereby achieving a good sealing effect and preventing leakage of the heat regulation medium.

In some embodiments, the cover plate further includes connecting ends located at two opposite ends in a third direction, the base plate includes stop edges opposite each other in the third direction, and the connecting ends are connected to the stop edges by welding, so that a relatively sealed structure is formed between the cover plate and the base plate to prevent the leakage of the heat regulation media therefrom.

In some embodiments, the fin includes two thermal conductive walls extending in the first direction and opposite each other, the two thermal conductive walls are spaced apart in the second direction, and in the first direction, the two thermal conductive walls are connected to the connecting portion at one end and are connected to each other at the other end, so as to form the cavity in the fin.

In some embodiments, a connection position between the two thermal conductive walls is rounded.

In the foregoing technical solution, the thermal conductive walls are enabled to have better bending performance.

In some embodiments, in the third direction, two ends of the fin include sealing walls, and the sealing walls are connected to the thermal conductive walls and form and enclose the cavity together with the thermal conductive walls, so that the fin is of a hollow structure.

In some embodiments, a surface, in contact with the battery cell, of the thermal conductive wall is coated with a thermal conductive adhesive, so that the thermal management assembly has better heat regulation performance.

In some embodiments, the plurality of fins are all formed as hollow structures each including a cavity, and the connecting portions are integrally formed with the fins.

In the foregoing technical solution, it can avoid the poor sealing occurring when respective connecting portions are connected to respective fins, which may lead to leakage of the heat regulation medium.

In some embodiments, the cover plate is a stamped component with fins formed by stamping an entire plate at predetermined positions, which can facilitate manufacturing of the thermal management assembly.

In a second aspect, an embodiment of the present application provides a battery, including the above thermal management assembly and battery cells. At least one battery cell is placed in each placement slot.

In some embodiments, in the first direction, an extension height of the fin is not greater than that of the battery cell.

In the foregoing technical solution, the fins can be prevented from affecting the electrical connection between the battery cells.

In some embodiments, in the third direction, an extension length of the fin is not less than that of at least one of the battery cells.

In some embodiments, in the second direction, a spacing width between adjacent two fins is not less than an extension width of the battery cell.

In the foregoing technical solution, the battery cell can be placed in the placement slot to avoid unnecessary bump.

In a third aspect, an embodiment of the present application provides an electric apparatus, including the battery as described above, where the battery is adapted for providing electrical energy.

### DESCRIPTION OF THE DRAWINGS

In order to explain the technical solutions of the embodiments of the present application more clearly, the accompanying drawings required for use in the embodiments of the present application will be briefly introduced below. Apparently, the accompanying drawings described below show only some embodiments of the present application. Those of ordinary skill in the art can derive other drawings based on the accompanying drawings without any creative effort.
Fig. 1 is a schematic structural diagram of a vehicle in some embodiments of the present application;
Fig. 2 is a schematic structural diagram of a battery in some embodiments of the present application;
Fig. 3 is a schematic diagram of assembly of battery cells and a thermal management assembly in some embodiments of the present application;
Fig. 4 is a schematic structural diagram of the thermal management assembly in some embodiments of the present application;
Fig. 5 is a cross-sectional schematic diagram of the thermal management assembly shown in Fig. 4;
Fig. 6 is an enlarged schematic diagram of region M in Fig. 5; and
Fig. 7 is a schematic structural diagram of a battery cell in some embodiments of the present application.

Reference numerals of specific implementations are as follows:
1000. Vehicle; 100. Battery; 200. Controller; 300. Motor; 30. Casing; 301. First casing portion; 302. Second casing portion; 20. Battery cell; 201. End cover; 202. Shell; 203. Electrode assembly;
10. Thermal management assembly; 1. Base plate; 11. Support portion; 12. Stop edge; 2. Cover plate; 21. Fin; 211. Thermal conductive wall; 212. Sealing wall; 22. Connecting portion; 23. Snapping end; 24. Connecting end; A. Flow channel; A1. Channel; A2. Cavity; B. Placement slot;
Z. First direction; X. Second direction; Y. Third direction.

### DETAILED DESCRIPTION

To make the objectives, technical solutions and advantages of the embodiments of the present application clearer, the technical solutions in the embodiments of the present application will be described clearly below with reference to the accompanying drawings in the embodiments of the present application. Apparently, the described embodiments are some but not all of the embodiments of the present application. All other embodiments obtained by the person skilled in the art based on the embodiments of the present application without creative efforts shall fall within the protection scope of the present application.

Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" and any variations thereof in the specification, claims, the above description of the accompanying drawings of the present application are intended to cover non-exclusive inclusion. The terms "first", "second", and the like in the specification, claims or the above description of accompanying drawings of the present application are adapted to distinguish different objects, rather than to describe specific sequences or primary and secondary relationships.

The "embodiment" mentioned in the present application means that specific features, structures or characteristics described in conjunction with the embodiment may be included in at least one embodiment of the present application. This phrase at various locations in the specification does not necessarily refer to the same embodiment, or an independent or alternative embodiment exclusive of another embodiment.

In the description of the present application, it should be noted that, unless otherwise specified and defined, the terms "mount", "connect", "couple", and "attach" should be broadly understood, for example, the terms may refer to a fixed connection, a detachable connection, or an integral connection, may refer to a direct connection, a connection through a medium, or a communication of interiors of two elements. Person skilled in the art may understand the specific meanings of the above terms in the present application according to specific circumstances.

The term "and/or" in the present application refers to merely an association relationship for describing associated objects, and represents that three relationships may exist. For example, A and/or B may represent the following three cases: A exists alone, both A and B exist, and B exists alone. In addition, the character "/" in the present application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

In the present application, "a plurality of" means two or more (including two).

The term "parallel" in the present application includes not only situations of absolute parallelism, but also situations of general parallelism recognized in engineering. Meanwhile, the term "perpendicular" further includes not only situations of absolute perpendicularity, but also situations of general perpendicularity recognized in engineering.

In the present application, the battery cells may include lithium-ion secondary battery cells, lithium-ion primary battery cells, lithium-sulfur battery cells, sodium lithium-ion battery cells, sodium-ion battery cells, magnesium-ion battery cells, or the like, which are not limited by the embodiments of the present application in this aspect. The battery cells may be cylindrical, flat, cuboid, or in other shapes, which are not limited by the embodiments of the present application in this aspect either.

The battery mentioned in the embodiments of the present application refers to a single physical module that includes one or more battery cells to provide higher voltage and capacity. The battery generally further includes a casing for packaging one or more battery cells. The casing may prevent liquid or other foreign matters from affecting charging or discharging of the battery cells.

The battery cell includes an electrode assembly and an electrolyte, and the electrode assembly includes a positive electrode plate, a negative electrode plate, and a separator. The battery cell mainly relies on migration of metal ions between the positive electrode plate and the negative electrode plate to work. The positive electrode plate includes a positive current collector and a positive active material layer applied on a surface of the positive current collector. Taking a lithium-ion battery as an example, a material for the positive current collector may be aluminum, and the positive active material layer includes a positive active material, which may be lithium cobalt oxide, lithium iron phosphate, ternary lithium, lithium manganate, or the like. The negative electrode plate includes a negative current collector and a negative active material layer applied on a surface of the negative current collector. A material for the negative current collector may be copper, and the negative active material layer includes a negative active material, which may be carbon, silicon, or the like. A material for the separator may be polypropylene (PP), polyethylene (PE), or the like.

At present, in view of the development of the market situation, the application of power batteries is increasingly widespread. The power batteries are not only applied in energy storage power systems such as hydropower, firepower, wind power, and solar power plants, but also widely applied in electric transportation vehicles such as electric bicycles, electric motorcycles, and electric vehicles, as well as in various fields such as military equipment and aerospace. With the continuous expansion of the application fields of power batteries, their market demand is also increasing.

In related technologies, a thermal management assembly is often disposed at a bottom of the battery casing, bottoms of the battery cells are in contact with the thermal management assembly, a heat regulation medium flows through the thermal management assembly, the thermal management assembly includes fins that extend among a plurality of battery cells, and the fins are supported by a metal material that can conduct heat so as to transfer the heat of the battery cells to the heat regulation medium, thereby achieving thermal management effects. However, the inventor noticed that, in the above configuration, the fins are made of a single-layer aluminum plate, poor sealing is prone to occur at positions where the fins are inserted into a cover plate, and only roots of the fins are in contact with the heat regulation medium, so the heat dissipation efficiency is relatively low.

In view of this, an embodiment of the present application provides a thermal management assembly, where a cover plate includes a plurality of fins and connecting portions each connected to adjacent two fins, the fins are formed as hollow structures each including a cavity, the cavity is included by a flow channel formed by the cover plate and the base plate, and a heat regulation medium flows through the flow channel, so that the flow channel conducts heat of a battery cell placed in a placement slot formed by the connecting portion and the corresponding adjacent two fins. The fins with the cavities can balance the temperature of battery cells through the internal heat regulation medium, are simple in structure, small in size, and easy to be processed, and can ensure an energy density of the battery.

The technical solutions described in the embodiments of the present application are applicable to a thermal management assembly, a battery using the thermal management assembly, and an electric apparatus powered by a battery.

The electric apparatus may be a vehicle, a mobile phone, a portable device, a notebook computer, a ship, a spacecraft, an electric toy, an electric tool, or the like. The vehicle may be a fuel-powered vehicle, a gas-powered vehicle, or a new energy vehicle. The new energy vehicle may be a battery electric vehicle, a hybrid electric vehicle, an extended-range vehicle, or the like. The spacecraft includes an airplane, a rocket, a space shuttle, a spaceship, or the like. The electric toy includes a fixed or mobile electric toy, such as a game console, an electric car toy, an electric ship toy, or an electric aircraft toy. The electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer. The embodiments of the present application do not impose special restrictions on the foregoing electric apparatus.

It should be understood that the technical solutions described in the embodiments of the present application are not only applicable to the electric apparatuses described above, but for the sake of simplicity, the following embodiments are all illustrated using a vehicle 1000 as an example.

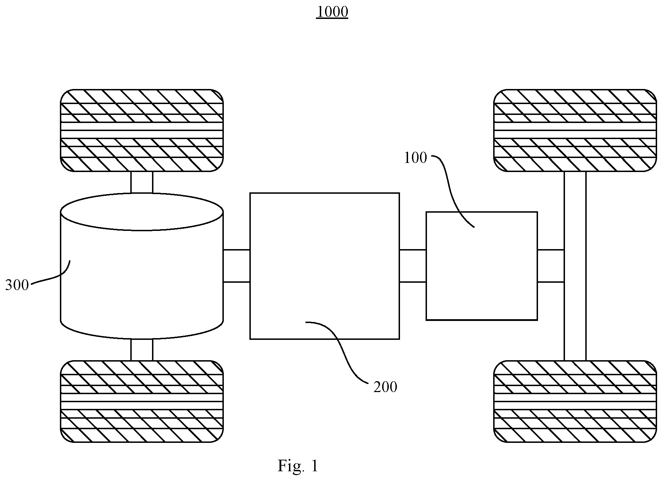

Fig. 1 is a schematic structural diagram of a vehicle 1000 in some embodiments of the present application. As shown in Fig. 1, the vehicle 1000 may be a fuel-powered vehicle, a gas-powered vehicle, or a new energy vehicle, and the new energy vehicle may be a battery electric vehicle, a hybrid electric vehicle, an extended-range vehicle, or the like. A battery 100 is disposed inside the vehicle 1000, and the battery 100 may be disposed at a bottom, head or tail of the vehicle 1000.

In order to meet different power usage requirements, a plurality of battery cells 20 may be disposed in the battery 100 inside the vehicle 1000. The battery 100 may be used for supplying power to the vehicle 1000, and for example, the battery 100 may be used as an operation power supply of the vehicle 1000. The vehicle 1000 may further include a controller 200 and a motor 300, and the controller 200 is used for controlling the battery 100 to supply power to the motor 300, for example, to satisfy a working power demand of the vehicle 1000 during startup, navigation and travelling. In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

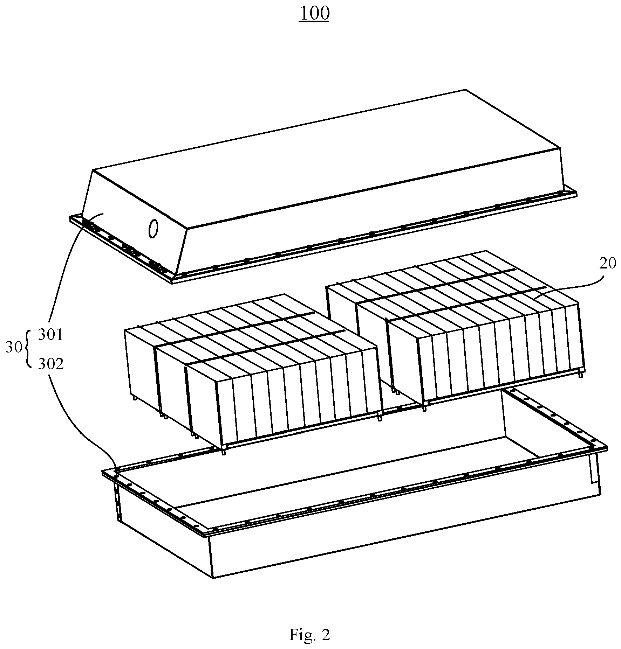

Fig. 2 is a schematic structural diagram of a battery 100 in some embodiments of the present application. As shown in Fig. 2, the battery 100 includes a casing 30, a battery cell 20, and a thermal management assembly 10.

The casing 30 may be of a simple three-dimensional structure such as a single cuboid, cylinder or sphere, or a complex three-dimensional structure formed by combining simple three-dimensional structures such as cuboids, cylinders or spheres, which is not limited by the embodiments of the present application in this aspect. The material of the casing 30 may be alloy materials such as aluminum alloy and iron alloy, or polymer materials such as polycarbonate and polyisocyanurate foam plastic, or composite materials such as glass fiber combined with epoxy resin, which is not limited in the embodiments of the present application in this aspect.

The casing 30 is used for accommodating the battery 100, and the casing 30 may be formed in various structures. In some embodiments, the casing 30 may include a first casing portion 301 and a second casing portion 302, which cover and close each other, and define an accommodating space for accommodating the battery cell 20 together. The second casing portion 302 may be of a hollow structure with an open end, the first casing portion 301 is of a plate-like structure, and the first casing portion 301 covers and closes the open side of the second casing portion 302 to form the casing 30 with an accommodating space; or, each of the first casing portion 301 and the second casing portion 302 may be of a hollow structure with an open side, and the open side of the first casing portion 301 covers and closes the open side of the second casing portion 302 to form the casing 30 with an accommodating space. The first casing portion 301 and the second casing portion 302 may be in various shapes, such as in cylindrical or cuboid shapes.

To improve the sealing performance after the first casing portion 301 is connected to the second casing portion 302, a sealing member such as a sealant or a sealing ring may be disposed between the first casing portion 301 and the second casing portion 302.

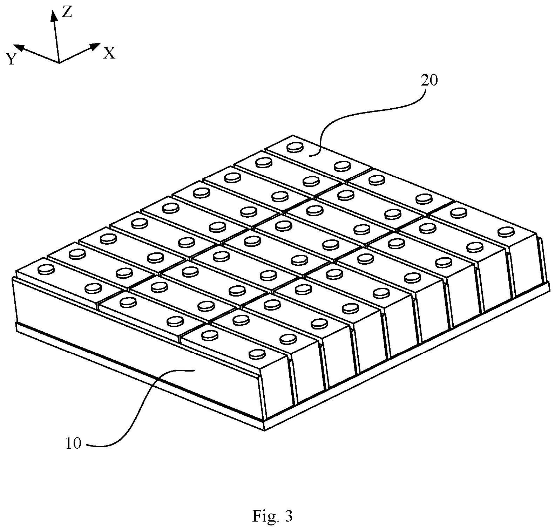

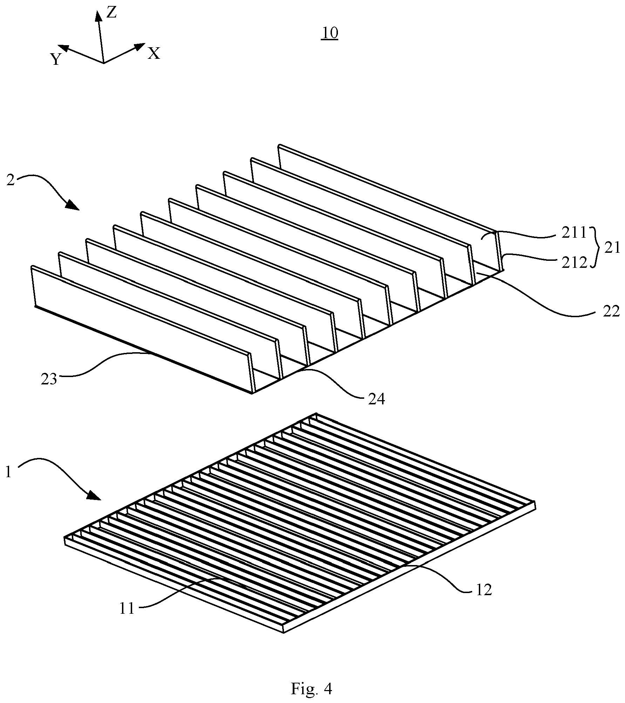

Fig. 3 is a schematic diagram of assembly of the battery cell 20 and the thermal management assembly 10 in some embodiments of the present application. Fig. 4 is a schematic structural diagram of the thermal management assembly 10 in some embodiments of the present application. As shown in Fig. 3 and Fig. 4, the thermal management assembly 10 includes a base plate 1 and a cover plate 2.

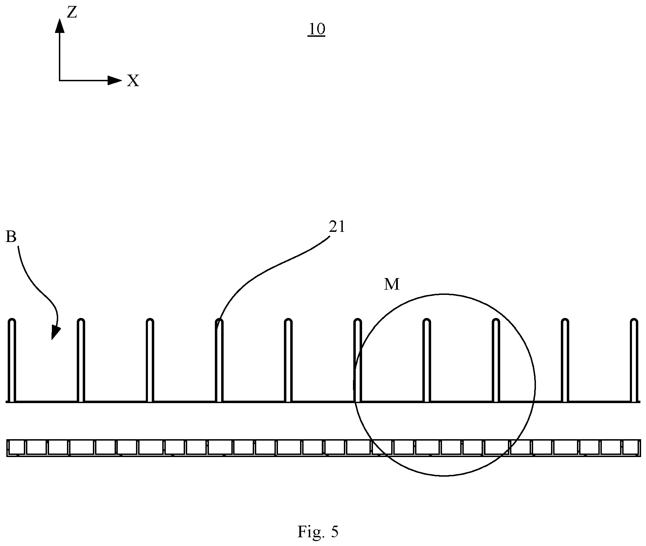

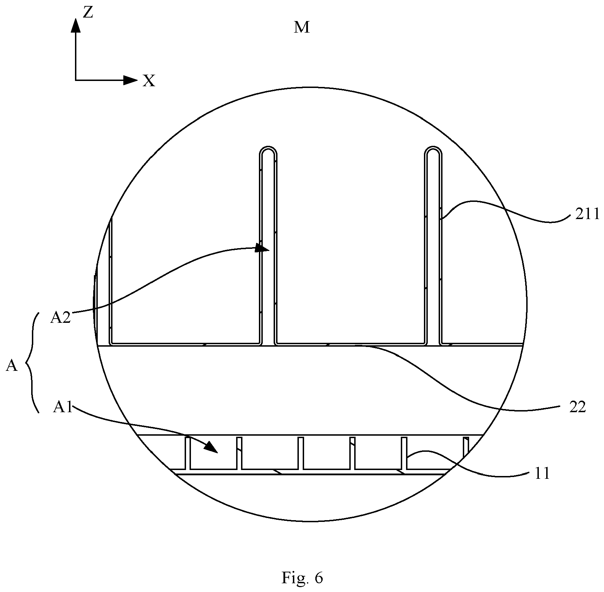

Fig. 5 is a cross-sectional schematic diagram of the thermal management assembly 10 shown in Fig. 4. Fig. 6 is an enlarged schematic diagram of region M in Fig. 5. As shown in Figs. 3, 4, 5, and 6, in some embodiments of the present application, the cover plate 2 covers and closes the base plate 1 to form a flow channel A, the flow channel A is adapted for accommodating a heat regulation medium, the cover plate 2 includes a plurality of fins 21 and connecting portions 22 each connected with adjacent two fins 21, the plurality of fins 21 extend in a first direction and are spaced apart in a second direction, at least some of the plurality of fins 21 are formed as hollow structures each including a cavity A2, the flow channel A includes the cavity A2, and the connecting portion 22 and the corresponding adjacent two fins 21 form a placement slot B, where the first direction intersects with the second direction.

For ease of description, in the embodiments of the present application, a height direction of the battery cell 20 is the first direction, namely, a Z direction; a length direction is the second direction, namely, an X direction; and the first direction and the second direction are perpendicular to each other. It should be understood that, when an angle between the first direction and the second direction is 85 to 95 degrees, the first direction and the second direction may be considered perpendicular to each other. The first direction and the second direction may alternatively be other directions, and there may be other angles between them, which will not be described in the present application. In order to indicate other factors of the thermal management assembly 10 in the following description, other directions will be further defined in detail, which will not be described here.

The fins 21 are of sheet-like structures, and all of fins 21 extend in the first direction Z, that is, a plurality of sheet-like structures extending in the first direction Z are connected to the cover plate 2 so as to protrude among battery cells 20 when the thermal management assembly 10 is assembled with the battery cells 20. The connecting portions 22, as a main body of the cover plate 2, are each connected between adjacent two fins 21. Since the fins 21 are spaced apart in the second direction X, the connecting portions 22 are each located in the spacing between adjacent two fins 21 to connect the adjacent fins 21 so as to form and enclose the placement slot B with the fins 21, which at least partially surrounds the battery cell 20 when the battery cell 20 is placed in the placement slot B.

Within the fins 21 extending in the first direction Z, cavities A2 also extend in the first direction Z. The flow channel A is formed between the cover plate 2 and the base plate 1, and the flow channel A includes the cavities A2, that is, the heat regulation medium flows between the cover plate 2 and the base plate 1 and also within the cavities A2 of the fins 21. When the battery cells 20 are placed in placement slots B, the heat regulation medium within the cavities A2 of the fins 21 and the heat regulation medium between the cover plate 2 and the base plate 1 will come into contact with the battery cells 20 through the fins 21 and the connecting portions 22 to achieve a heat regulation effect on the battery cells 20.

The fins 21 are formed as hollow structures each including the cavity A2, and the heat regulation medium is introduced into the cavities A2 of the fins 21, which can achieve a better heat dissipation effect on the battery cells 20. Moreover, the fins 21 are of sheet-like structures, which occupy a small volume when protruding among the plurality of battery cells 20, so that the battery 100 can maintain a good energy density.

Optionally, the plurality of fins 21 may all include cavities A2 or merely some of the fines 21 include cavities A2. At least some of the plurality of fins 21 include the cavities A2, meaning that some of the fins 21 do not include cavities A2 while are formed as solid structures into which no heat regulation medium is introduced. In this case, the fins 21 can also transfer the heat of the battery to the heat regulation medium in the flow channel A through their ends connected to the cover plate 2, thereby achieving the thermal control effect to a certain degree.

In some embodiments of the present application, the base plate 1 includes a plurality of support portions 11, a channel A1 is formed between adjacent two support portions 11, and the flow channel A includes the channel A1.

The cover plate 2 covers and closes the base plate 1, and the battery cells 20 are placed in the placement slots B of the cover plate 2. To prevent unnecessary deformation of the cover plate 2 from affecting the thermal management effect, the base plate 1 includes the plurality of support portions 11. The support portions 11 are formed as raised strips extending from the base plate 1 in the first direction Z towards the cover plate 2, to provide support for the cover plate 2.

The channel A1, formed between adjacent support portions 11, is a channel through which the heat regulation medium flows. Optionally, merely some of the support portions 11 may be in contact with the cover plate 2 to support the cover plate 2, and in this case, gaps are formed between the cover plate 2 and other support portions 11 that are not in contact with the cover plate 2. The heat regulation medium may flow through the gaps, thereby increasing the contact area between the heat regulation medium and the cover plate 2 and improving the heat exchange rate between the thermal management assembly 10 and the battery cells 20.

In some embodiments of the present application, in at least some of the fins 21, an orthographic projection of each fin 21 on the base plate 1 falls within a range of a corresponding channel A1.

Since the flow channel A includes the cavity A2 inside the fin 21 and the channel A1, by making the orthographic projection of the fin 21 on the base plate 1 to fall within the range of the channel A1, that is, the fin 21 is located above the channel A1 in the first direction Z, it can be ensured that the channel A1 is in communication with the cavity A2.

Optionally, the orthographic projection of the fin 21 on the base plate 1 may partially overlap with the channel A1, or fall between two adjacent channels A1; in this case, the heat regulation medium may also be introduced into the cavity A2 of the fin 21, which is not limited by the embodiments of the present application in this aspect.

In some embodiments of the present application, an orthographic projection of the connecting portion 22 on the base plate 1 covers some of the support portions 11 and channels A1.

The connecting portion 22 connects with adjacent fins 21, and since the fins 21 are spaced apart in the second direction X, the orthographic projection of the connecting portion 22 between the adjacent fins 21 on the base plate 1 covers the support portions 11 and the channels A1, so that the support portions 11 are at least arranged on two sides of each fin 21, so as to provide better support for the battery cell 20 placed on the connecting portion 22.

Optionally, in the second direction X, an extension width of the connecting portion 22 may be greater than a sum of an extension width of the support portion 11 and an extension width of the channel A1, so that at least one support portion 11 is included below the connecting portion 22.

In some embodiments of the present application, at least some of a plurality of channels A1 are in communication with each other.

At least some of the plurality of channels A1 are in communication with each other, so that the thermal management assembly 10 may have a plurality of flow channels A. The temperature of a plurality of groups of battery cells 20 can be controlled by controlling the temperature of the heat regulation medium in the plurality of flow channels A, so as to achieve thermal management on the battery 100.

Optionally, the thermal management assembly 10 further includes a medium inlet and a medium outlet disposed at two ends of the base plate 1 respectively and in communication with the flow channel A. In a case that the plurality of channels A1 are in communication with each other, the thermal management assembly 10 has only one set of medium inlet and medium outlet. In a case that merely some of the channels A1 are in communication with each other, the thermal management assembly 10 may have a corresponding number of medium inlets and medium outlets.

In some embodiments of the present application, the cover plate 2 includes snapping ends 23 at two opposite ends in the second direction X, and the snapping ends 23 are connected with the outermost support portions 11 of the base plate 1 in the second direction X in a snap-fit manner.

The outermost support portions 11 of the base plate 1 in the second direction X may be regarded as edges of the base plate 1 in the second direction X, and by making the cover plate 2 to include the snapping ends 23 at two ends in the second direction X, the cover plate 2 and the base plate 1 can be connected to each other in the second direction X, thereby achieving a good sealing effect and preventing leakage of the heat regulation medium.

Optionally, the cover plate 2 may be connected to the base plate 1 by welding, bonding, or other manners that can achieve a sealing effect, which is not limited by the embodiments of the present application in this aspect.

In some embodiments of the present application, the cover plate 2 further includes connecting ends 24 located at two opposite ends in a third direction, the base plate 1 includes stop edges 12 opposite each other in the third direction, and the connecting ends 24 are connected to the stop edges 12 by welding.

For ease of description, in the embodiments of the present application, a width direction of the battery cell 20 is the third direction, namely, a Y direction, and the first direction, the second direction, and the third direction are perpendicular to each other. It should be understood that, when an angle among the first direction, the second direction, and the third direction is 85 to 95 degrees, the three directions may be considered perpendicular to each other. The first direction, the second direction, and the third direction may alternatively be other directions, which are not limited by the embodiments of the present application.

In the third direction Y, two opposite ends of the cover plate 2 include connecting ends 24, and two opposite ends of the base plate 1 include stop edges 12, that is, the cover plate 2 and the base plate 1 are connected to each other in the third direction Y through the connecting ends 24 and the stop edges 12. The connecting ends 24 and the stop edges 12 are connected by welding, so that there is a relatively sealed structure between the cover plate 2 and the base plate 1, thereby preventing the heat regulation medium from leaking therefrom.

In some embodiments of the present application, the fin 21 includes two thermal conductive walls 211 extending in the first direction Z and opposite each other, the two thermal conductive walls 211 are spaced apart in the second direction X, and in the first direction Z, the two thermal conductive walls 211 are connected to the connecting portion 22 at one end and are connected to each other at the other end.

The thermal conductive wall 211 is a wall, in contact with the battery cell 20, of the fin 21. The two thermal conductive walls 211 extend in the first direction Z and are spaced apart in the second direction X, and a distance is remained between them in the second direction X to form the cavity A2 in the fin 21. The thermal conductive walls 211 are connected to the connecting portion 22 at one end in the first direction Z, and are connected to each other at the other end, so that the fin 21 extends from the connecting portion 22 and is closed at the top.

In some embodiments of the present application, a connection position between the two thermal conductive walls 211 is rounded.

By making the connection position between the two thermal conductive walls 211 to be rounded, the thermal conductive walls 211 can have better bending performance, that is, can be deformed to a certain degree when the battery cell 20 expands, so as to adapt to the volume change of the battery cell 20 by compressing the volume of the cavity A2. In addition, the rounded connection position between the thermal conductive walls 211 can facilitate placement of the battery cell 20 into the placement slot B, and prevents the battery cell 20 from being scratched when being placed into the placement slot B.

In some embodiments of the present application, in the third direction Y, two ends of the fin 21 include sealing walls 212, and the sealing walls 212 are connected to the thermal conductive walls 211 and form and enclose the cavity A2 together with the thermal conductive walls 211.

Projections of the sealing walls 212 along the second direction X are consistent with the cavity A2 in shape, and the sealing walls 212 are connected to the two thermal conductive walls 211, so that the fin 21 is formed into a sealed hollow structure, that is, the sealing walls 212 and the two thermal conductive walls 211 form and enclose the cavity A2. Optionally, the sealing walls 212 may be connected to the thermal conductive walls 211 by welding, bonding, or the like, as long as the sealing walls 212 and the thermal conductive walls 211 can be connected in a sealing manner, which are not limited by the embodiments of the present application in this aspect.

In some embodiments of the present application, a surface, in contact with the battery cell 20, of the thermal conductive wall 211 is coated with a thermal conductive adhesive.

The thermal conductive adhesive is a colloid with good thermal conductivity, and by coating the thermal conductive wall 211 with the thermal conductive adhesive, the heat of the battery cell 20 can be better transferred to the thermal conductive wall 211 in the case that the thermal conductive wall 211 is in contact with the battery cell 20 and transferred to the heat regulation medium in the internal cavity A2 of the fin 21 through the thermal conductive wall 211, so that the thermal management assembly 10 has better heat regulation performance.

In some embodiments of the present application, the plurality of fins 21 are all formed as hollow structures each including a cavity A2, and the connecting portions 22 are integrally formed with the fins 21.

By integrally forming the connecting portions 22 with the fins 21, it can avoid the poor sealing, which may lead to leakage of the heat regulation medium, from occurring when respective connecting portions 22 are connected to respective fins 21.

In some embodiments of the present application, the cover plate 2 is a stamping component with fins 21 formed by stamping an entire plate at predetermined positions.

The cover plate 2 is formed by stamping the entire plate, which can facilitate manufacturing of the thermal management assembly 10, with a relatively low cost. After the fins 21 and the connecting portions 22 are formed by stamping the plate, the sealing walls 212 are connected between the two thermal conductive walls 211 of respective fins 21, so that the fins 21 are formed into hollow structures including the cavities A2.

In the embodiments of the present application, the cover plate 2 is formed by stamping an aluminum sheet, and since the aluminum sheet has a good thermal conductivity, it can well transfer the heat of the battery cells 20 to the heat regulation medium, thereby achieving thermal management on the battery cells 20. Also, the aluminum sheet itself has elasticity to a certain degree, and may be deformed to a certain degree along with the expansion of the battery cells 20, so that the overall structure of the battery cells 20 is more stable.

With reference to Fig. 3 and Fig. 4 again, one or more battery cells 20 may be disposed in the casing 30. In some embodiments of the present application, at least one battery cell 20 is placed in each placement slot B.

A plurality of battery cells 20 may be connected in series, in parallel, or in hybrid. The hybrid connection refers to a combination of series connection and parallel connection in the plurality of battery cells 20. The plurality of battery cells 20 may be directly connected in series, in parallel, or in hybrid together, and then the integrity formed by the plurality of battery cells 20 is accommodated in the casing 30. Alternatively, the plurality of battery cells 20 may be first connected in series, in parallel, or in hybrid to form a battery 100, and then a plurality of batteries 100 are connected in series, in parallel, or in hybrid to form an integrity, which is accommodated in the casing 30. The plurality of battery cells 20 in the battery 100 may be electrically connected through a busbar to achieve the parallel, series, or hybrid connection of the plurality of battery cells 20 in the battery 100.

In some embodiments of the present application, in the first direction Z, an extension height of the fin 21 is not greater than that of the battery cell 20.

In the first direction Z, the extension height of the fin 21 matches that of the battery cell 20, which can prevent the fin 21 from extending beyond the battery cell 20 to interfere with the busbar that may be disposed at a top end of the battery cell 20, and prevent the fin 21 from affecting the electrical connection between the battery cells 20.

In some embodiments of the present application, in the third direction Y, an extension length of the fin 21 is not less than that of at least one battery cell 20.

Since at least one battery cell 20 is placed in each placement slot B, in a case that a plurality of battery cells 20 are placed in the placement slot B, the extension length of the fin 21 may merely match the extension length of some of the battery cells 20 in the third direction Y. In this case, the fin 21 may be in contact with some of the battery cells 20 in the third direction Y, the thermal management effect on the battery 100 still can be achieved to a certain degree, and the embodiments of the present application are not limited in this aspect.

In some embodiments of the present application, in the second direction X, a spacing width between adjacent two fins 21 is not less than an extension width of the battery cell 20.

In the second direction X, the spacing width between the adjacent fins 21 is not less than the extension width of the battery cell 20, so that the battery cell 20 can be placed in the placement slot B formed by adjacent two fins 21 and the corresponding connecting portion 22. However, it should be noted that the spacing width between the adjacent fins 21 should not be greater than the extension width of the battery cell 20 too much, so as to avoid unnecessary bump caused by the shaking of the battery cell 20 between them.

Optionally, in the second direction X, a plurality of battery cells 20 may be arranged between adjacent two fins 21. For example, two groups of battery cells 20 may be placed between the adjacent two fins 21. This setting can be determined according to specific production needs, and the embodiments of the present application do not limit this.

In some optional embodiments, the battery 100 may include a plurality of thermal management assemblies 10. For example, two thermal management assemblies 10 may be opposite each other in the first direction Z, the fins 21 of one thermal management assembly 10 protrudes into the placement slots B of the other thermal management assembly 10, the fins 21 of the two thermal management assemblies 10 are arranged alternately, and the battery cells 20 are disposed between adjacent fins 21. In this case, the two thermal management assemblies 10 may achieve different thermal management effects on the battery cells 20, thereby avoiding multiple times of heating or cooling of the heat regulation medium, or avoiding introduction of the heat regulation medium into the same thermal management assembly 10 for multiple times.

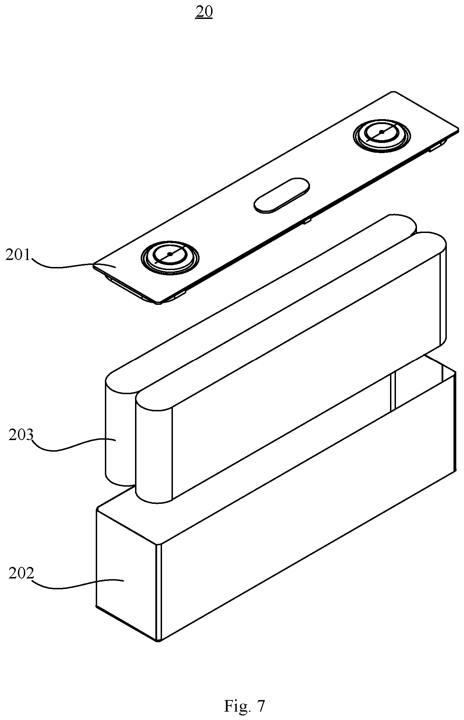

Fig. 7 is a schematic diagram of an internal structure of a battery cell 20 in some embodiments of the present application. The battery cell 20 refers to a minimum unit that constitutes the battery 100. As shown in Fig. 7, the battery cell 20 further includes an end cover 201, a shell 202, an electrode assembly 203, and other functional components.

The end cover 201 refers to a component that covers and closes an opening of the shell 202 to isolate an internal environment of the battery cell 20 from an external environment. Unlimitedly, a shape of the end cover 201 may adapt to that of the shell 202 to match the shell 202. Optionally, the end cover 201 may be made of a material with certain hardness and strength (such as aluminum alloy); in this case, the end cover 201 is less prone to deformation when being squeezed and collided, so that the battery cell 20 can have higher structural strength and its safety can be improved. Functional components such as an electrode terminal and an explosion-proof valve are disposed on the end cover 201. The electrode terminal may be used for being electrically connected to the electrode assembly 203 to output or input electrical energy of the battery cell 20. In some embodiments, a pressure relief mechanism may be further disposed on the end cover 201 to release internal pressure when the internal pressure or temperature of the battery cell 20 reaches a threshold. A material of the end cover 201 may be various, such as copper, iron, aluminum, stainless steel, aluminum alloy, or plastic, and is not specially limited in the embodiments of the present application. In some embodiments, an insulating member may be further disposed on an inner side of the end cover 201, and the insulating member may be used for isolating electrical connection plate members inside the shell 202 from the end cover 201 to reduce a risk of short-circuiting. For example, the insulating member may be made of plastic, rubber, or the like.

The shell 202 is a component matching the end cover 201 to form the internal environment of the battery cell 20, where the formed internal environment may be used for accommodating the electrode assembly 203, an electrolyte (not shown), and other components. The shell 202 and the end cover 201 may be independent components, the shell 202 may be provided with an opening, and the end cover 201 covers and closes the opening to form the internal environment of the battery cell 20. Unlimitedly, the end cover 201 and the shell 202 may be integrally formed. Specifically, the end cover 201 and the shell 202 may form a common connection surface before other components are assembled into the shell, and when the interior of the shell 202 need to be sealed, the end cover 201 covers and closes the shell 202. The shell 202 may be in various shapes and sizes, such as cuboid, cylinder, or hexagonal prism. Specifically, the shape of the shell 202 may be determined according to a specific shape and size of the electrode assembly 203. A material of the shell 202 may be various, such as copper, iron, aluminum, stainless steel, aluminum alloy, or plastic, which is not specially limited in the embodiments of the present application.

The electrode assembly 203 is a component that undergoes electrochemical reactions in the battery cell 20. The shell 202 may contain one or more electrode assemblies 203. The electrode assembly 203 is mainly formed by winding or stacking a positive electrode plate and a negative electrode plate, and a separator is generally disposed between the positive electrode plate and the negative electrode plate. Portions of the positive electrode plate and the negative electrode plate that include active materials constitute a main body of the electrode assembly 203, while portions of the positive electrode plate and the negative electrode plate that do not include active materials constitute respective tabs. The positive tab and the negative tab may be located at one end of the main body or at two ends of the main body respectively. In charging or discharging process of the battery 100, the positive and negative active materials react with the electrolyte, and the tabs are connected to electrode terminals to form a current circuit.

In summary, in some optional embodiments of the present application, the thermal management assembly 10 is provided with a base plate 1 and a cover plate 2, the cover plate 2 covers and closes the base plate 1 to form a flow channel A, the flow channel A is adapted for accommodating a heat regulation medium, the cover plate 2 includes a plurality of fins 21 and connecting portions 22 each connected to adjacent two fins 21, the plurality of fins 21 extend in a first direction and are spaced apart in a second direction, at least some of the plurality of fins 21 are formed as hollow structures each including a cavity A2, the flow channel A includes the cavity A2, and the connecting portion 22 and corresponding adjacent two fins 21 form a placement slot B for placing a battery cell 20 of a battery 100. In some cases, the thermal management assembly 10 of the embodiments of the present application can achieve a good thermal management effect on the battery 100.

It should be noted that the embodiments in the present application and the features in the embodiments may be combined with each other on a non-conflict basis.

In conclusion, it should be noted that the above embodiments are merely used for explaining the technical solutions of the present application, but not for limiting the present application. Although the present application is described in detail with reference to the foregoing embodiments, the person skilled in the art should understand that they can still make modifications to the technical solutions described in the foregoing embodiments or make equivalent replacements to some technical features thereof, but these modifications or replacements do not make the essences of the corresponding technical solutions depart from the spirit and scope of the technical solutions of the embodiments of the present application.

## Claims

1. A thermal management assembly for a vehicle, comprising:
a base plate (1); and
a cover plate (2) covering and closing the base plate (1) to form a flow channel (A), wherein the flow channel (A) is adapted for accommodating a heat regulation medium, the cover plate (2) comprises a plurality of fins (21) and connecting portions (22) each connected to adjacent two fins (21), the plurality of fins (21) extend in a first direction and are spaced apart in a second direction, at least some of the plurality of fins (21) are formed as hollow structures each comprising a cavity (A2), the flow channel (A) comprises the cavity (A2), and each connecting portion (22) and corresponding adjacent two fins (21) form a placement slot (B),
wherein the first direction intersects with the second direction.

2. The thermal management assembly according to claim 1, wherein the base plate (1) comprises a plurality of support portions (11), a channel (A1) is formed between adjacent two support portions (11), and the flow channel (A) comprises the channel (A1).

3. The thermal management assembly according to claim 2, wherein in at least some of the fins (21), an orthographic projection of each fin (21) on the base plate (1) falls within a range of a corresponding channel (A1).

4. The thermal management assembly according to claim 2, wherein an orthographic projection of the connecting portion (22) on the base plate (1) covers some of the support portions (11) and channels (A1).

5. The thermal management assembly according to any one of claims 2-4, wherein at least some of a plurality of channels (A1) are in communication with each other.

6. The thermal management assembly according to claim 2, wherein the cover plate (2) comprises snapping ends (23) located at two opposite ends in the second direction, and the snapping ends (23) are connected with the outermost support portions (11) of the base plate (1) in the second direction in a snap-fit manner.

7. The thermal management assembly according to claim 6, wherein the cover plate (2) further comprises connecting ends (24) located at two opposite ends in a third direction, the base plate (1) comprises stop edges (12) opposite each other in the third direction, and the connecting ends (24) are connected to the stop edges (12) by welding.

8. The thermal management assembly according to claim 1, wherein the fin (21) comprises two thermal conductive walls (211) extending in the first direction and opposite each other, the two thermal conductive walls (211) are spaced apart in the second direction, and in the first direction, the two thermal conductive walls (211) are connected at one end and are connected to each other at the other end.

9. The thermal management assembly according to claim 8, wherein a connection position between the two thermal conductive walls (211) is rounded.

10. The thermal management assembly according to claim 8, wherein in the third direction, two ends of the fin (21) comprise sealing walls (212), and the sealing walls (212) are connected to the thermal conductive walls (211) and form and enclose the cavity (A2) together with the thermal conductive walls (211).

11. The thermal management assembly according to claim 8, wherein a surface, in contact with a battery cell, of the thermal conductive wall (211) is coated with a thermal conductive adhesive.

12. The thermal management assembly according to claim 8 or claim 10, wherein the plurality of fins (21) are all formed as hollow structures each comprising a cavity (A2), and the connecting portions (22) are integrally formed with the fins (21).

13. The thermal management assembly according to claim 12, wherein the cover plate (2) is a stamping component with the fins (21) formed by stamping an entire plate at predetermined positions.

14. A battery, comprising:
the thermal management assembly according to any one of claims 1-13; and
battery cells, wherein at least one of the battery cells is placed in each placement slot (B).

15. The battery according to claim 14, wherein in the first direction, an extension height of the fin (21) is not greater than that of the battery cell.

16. The battery according to claim 14 or 15, wherein in the third direction, an extension length of the fin (21) is not less than that of at least one of the battery cells.

17. The battery according to any one of claims 14-16, wherein in the second direction, a spacing width between adjacent two fins (21) is not less than an extension width of the battery cell.

18. An electric apparatus, comprising:
the battery according to any one of claims 14-17, wherein the battery is adapted for providing electrical energy.
